(19) Europäisches Patentamt
European Patent Office
Office européen des brevets

(11) Numéro de publication : **0 099 772 B2**

# (12) NOUVEAU FASCICULE DE BREVET EUROPEEN

(45) Date de publication du nouveau fascicule du brevet : **13.11.91 Bulletin 91/46**

(51) Int. Cl.$^5$ : **C08F 10/02**, C08F 4/62

(21) Numéro de dépôt : **83401221.3**

(22) Date de dépôt : **14.06.83**

## (54) Catalyseurs pour la polymérisation et la copolymérisation de l'éthylène et procédés de polymérisation utilisant ces catalyseurs.

(30) Priorité : **24.06.82 FR 8211055**
**24.06.82 FR 8211053**

(43) Date de publication de la demande :
**01.02.84 Bulletin 84/05**

(45) Mention de la délivrance du brevet :
**12.03.86 Bulletin 86/11**

(45) Mention de la décision concernant l'opposition :
**13.11.91 Bulletin 91/46**

(84) Etats contractants désignés :
**AT BE DE FR GB IT NL SE**

(56) Documents cités :
**EP-A- 0 024 933**
**EP-B- 0 000 007**
**DE-A- 1 957 705**
**DE-A- 3 012 272**
**DE-A- 3 012 276**
**DE-B- 2 993 997**
**FR-A- 2 014 887**
**GB-A- 1 387 890**
**GB-A- 1 434 543**
**GB-A- 1 550 195**
**GB-A- 1 580 635**
**JP-A-81 005 858**

(56) Documents cités :
**JP-A-81 138 325**
**NL-A- 6 917 308**
**US-A- 3 953 414**
**US-A- 4 004 071**
**US-A- 4 244 838**
**US-A- 4 396 748**
**US-A- 4 526 941**
**Derwent Abstract 14208 C/08**

(73) Titulaire : **BP Chimie Société Anonyme**
**Tour Neptune - La Défense 1 20, place de Seine**
**F-92400 Courbevoie (FR)**

(72) Inventeur : **Blaya, Alain**
**5, Lotissement Le Mistral La Roche Percée**
**F-13500 Martigues (FR)**
Inventeur : **Crouzet, Pierre**
**Le Haut Touret**
**F-13500 Martigues (FR)**
Inventeur : **Sandis, Stylianos**
**1 Avenue de la Durance**
**F-13117 Lavera (FR)**
Inventeur : **Bailly, Jean-Claude**
**Les Platanes Rue E.Amavet**
**F-13500 Martigues (FR)**

(74) Mandataire : **Patentanwälte Beetz sen. - Beetz jun. Timpe - Siegfried - Schmitt-Fumian**
**Steinsdorfstrasse 10**
**W-8000 München 22 (DE)**

**EP 0 099 772 B2**

## Description

La présente invention concerne de nouveaux catalyseurs pour la polymérisation et la copolymérisation de l'éthylène, leur préparation et les procédés utilisant ces catalyseurs.

On sait que les catalyseurs de polymérisation et de copolymérisation des alpha-oléfines, catalyseurs dits "Ziegler-Natta", sont obtenus par la combinaison de composés métalliques de transition appartenant aux groupes IV, V ou VI de la Classification périodique des éléments, avec au moins un composé organométallique des groupes I à III de cette classification.

On sait par ailleurs que les propriétés de ces catalyseurs peuvent être fortement influencées lorsque ledit composé métallique de transition est utilisé avec un composé minéral solide qui peut être coprécipité avec ledit composé métallique de transition ou qui est utilisé comme support dudit composé métallique de transition.

Comme composé minéral utilisé avantageusement comme support, on peut mentionner par exemple les oxydes de magnésium et de titane, le silicate d'aluminium, le carbonate de magnésium et le chlorure de magnésium.

Dans cette technique de catalyseur supporté, les propriétés du support, d'une part, et le procédé de préparation du catalyseur (dépôt du composé métallique de transition), d'autre part, ont une importance très grande sur les propriétés dudit catalyseur.

DE-A-29 33 997 décrit des catalyseurs supportés pour la polymérisation et la copolymérisation de l'éthylène, qui consistent en un support à base de chlorure de magnésium comprenant un composé donneur d'électrons et se présentent sous forme de particules sphéroidiques ayant un diamètre moyen en masse(Dm) compris entre 10 et 100 µm et une distribution granulométrique telle que le rapport du diamètre moyen en masse, Dm, au diamètre moyen en nombre (Dn) est inférieur ou égal à 3, sur lequel un composé de titane est précipité.

Les particules du support sont constitués d'un complexe d'addition de formule $MgX_2 \rightarrow nED$, dans laquelle X est un halogène, n est un nombre de 2 à 6, et ED est un donneur d'électrons, préférablement un composé contenant des atomes d'hydrogène actif.

Le taux du donneur d'électrons étant relativement élevé, ces supports ne consistent pas essentiellement de $MgX_2$.

Ils sont préparés selon DE-A-29 24 029 par refroidissement abrupt d'une émulsion du complexe d'addition du chlorure de magnésium fondu dans un liquide non-miscible après passage par un tuyau.

Pour l'utilisation en tant que supports, les particules sont tamisées. La surface spécifique est de 700 à 900 $m^2/g$ (BET).

La présente invention concerne des catalyseurs supportés, le support étant constitué essentiellement d'un chlorure de magnésium ayant des propriétés spécifiques, et le catalyseur étant un composé de titane.

Le support du catalyseur est constitué de particules à base essentiellement de chlorure de magnésium, qui présentent les caractéristiques suivantes:

- les particules ont une forme sphéroïdale définie par le fait que, si D et d sont les grand et petit axes de ces particules, $D/d \leq 1,3$;
- les particules ont un diamètre moyen en masse compris entre 10 et 100 µm environ;
- la distribution granulométrique de ces particules est telle que le rapport Dm/Dn du diamètre moyen en masse, Dm, au diamètre moyen en nombre, Dn, est inférieur ou égal à 3, par exemple compris entre 1,1 et 2,5; plus particulièrement, la distribution granulométrique de ces particules est très étroite et telle que le rapport Dm/Dn est compris entre 1,1 et 1,5; on note en outre l'absence pratiquement totale de particules de diamètre supérieur à 2 x Dm ou inférieur à 0,2 x Dm; la distribution granulométrique peut, en outre, être telle que plus de 90% en poids des particules d'un même lot sont compris dans la fourchette Dm ± 10%;
- les particules peuvent présenter une surface légèrement bosselée telle que celle d'une framboise, mais de préférence une surface très lisse;
- la surface spécifique des particules est comprise entre environ 20 et 60 $m^2/g$ (BET);
- la densité des particules est comprise entre environ 1,6 et 2,2;
- les particules sont constituées essentiellement de chlorure de magnésium et éventuellement d'un chlorure d'aluminium; le rapport atomique Cl/(Mg+3/2 Al) est légèrement inférieur à 2; en outre, les particules contiennent, en faible proportion, des produits à liaison Mg-C et également un composé donneur d'électrons.

Les supports ainsi définis peuvent notamment être préparés en faisant réagir un composé organomagnésien avec un composé organique chloré, en présence d'un composé donneur d'électrons. Comme composé organomagnésien, on peut choisir soit un produit de formule $R_1M_gR_2$, soit un complexe d'addition de formules $R_1M_gR_2$, $xAl(R_3)_3$, formules dans lesquelles $R_1$, $R_2$ et $R_3$ sont des radicaux alcoyle identiques ou différents ayant de 2 à 12 atomes de carbone et x est compris entre 0,01 et 2. Comme composé organique chloré, on choisit un chlorure d'alcoyle de formule $R_4Cl$ dans laquelle $R_4$ est un radical alcoyle secondaire ou de préférence tertiaire ayant de 3 à 12 atomes de carbone. Le composé donneur d'électrons utilisé est choisi parmi les amines, les amides, les phosphines, les sulfoxydes, les sulfones et les éthers. Parmi les composés donneurs d'électrons, on peut choisir notamment un éther aliphatique de formule $R_5OR_6$, dans laquelle $R_5$ et $R_6$

sont des radicaux alcoyle identiques ou différents ayant de 1 à 12 atomes de carbone.

De plus, les divers réactifs mis en jeu pour la préparation des supports tels que définis précédemment doivent être utilisés dans les conditions suivantes:

– le rapport molaire $R_4Cl/R_1M_gR_2$ est compris entre 1,5 et 2,5 et de préférence compris entre 1,85 et 1,95;

– le rapport molaire $R_4Cl/R_1M_gR_2$, $xAl(R_3)_3$ est compris entre 1,5 (1+3/2·x) et 2,5 (1+3/2·x), et de préférence entre 1,85 (1+3/2·x) et 1,95 (1+3/2·x);

– le rapport molaire entre le composé donneur d'électrons et le composé organomagnésien ($R_1M_gR_2$ ou $R_1M_gR_2$, $xAl(R_3)_3$) est compris entre 0,01 et 2, et de préférence compris entre 0,01 et 1;

– la réaction entre le composé organomagnésien et le composé organique chloré a lieu sous agitation, au sein d'un hydrocarbure liquide, à une température comprise entre 5 et 80°C, et en particulier entre 35 et 80°C.

La préparation des catalyseurs à partir des supports ainsi définis est réalisée par la précipitation, sur lesdits supports, d'un composé du titane dont la valence est inférieure à 4. Cette précipitation est effectuée par réaction de réduction d'un composé du titane de formule $Ti(OR_7)_{4-n}X_n$, dans laquelle $R_7$ est un groupement alcoyle contenant de 2 à 6 atomes de carbone, X est un atome de chlore ou de brome et n est un nombre entier ou fractonnaire tel que $1 \leqq n \leqq 4$, au moyen d'un agent réducteur choisi parmi des composés organomagnésiens de formule $R_8M_gR_9$, dans laquelle $R_8$ et $R_9$ sont des groupements alcoyle identiques ou différents contenant de 2 à 12 atomes de carbone, des composés organozinciques de formule $Zn(R_{10})_{(2-y)}X_y$, dans laquelle $R_{10}$ est un groupement alcoyle ayant 2 à 12 atomes de carbone, X est le chlore ou le brome et y est un nombre entier ou fractionnaire tel que $0 \leqq y \leqq 1$, et des composés organoaluminiques de formule $Al(R_{11})_{(3-z)}X_z$, dans laquelle $R_{11}$ est un groupement alcoyle ayant 2 à 12 atomes de carbone, X est le chlore ou le brome et z est un nombre entier ou fractionnaire tel que $0 \leqq z \leqq 2$.

La réaction de réduction est réalisée éventuellement en présence d'un composé donneur d'électrons choisi parmi les amines, les amides, les phosphines, les sulfoxydes, les sulfones et les éthers.

Les quantités relatives molaires des divers composés (support, composé du titane, organomagnésien ou organozincique ou organoaluminique, donneur d'électrons sont, en rapports molaires, telles que:

– support/composé du titane compris entre 1 et 50, et de préférence compris entre 2,5 et 10;

– composé organomagnésien ou organozincique ou organoaluminique/composé du titane inférieur à 3 et, de préférence, compris entre 0,5 et 1,5;

– composé donneur d'électrons/composé du titane compris entre 0 et 5, et de préférence compris entre 0,1 et 1,5.

Selon une forme préférée de réalisation de l'invention, la réaction de réduction est réalisée en présence d'un éther aliphatique de formule $R_{12}OR_{13}$, dans laquelle $R_{12}$ et $R_{13}$ sont des groupements alcoyle identiques ou différents, ayant de 1 à 12 atomes de carbone.

La précipitation est effectuée à une température comprise entre -30 et 100°C, sous agitation, au sein d'un milieu d'hydrocarbure liquide.

La mise en oeuvre des réactifs dans cette précipitation peut être réalisée de diverses façons. On peut, par exemple, introduire progressivement l'agent réducteur (composé organomagnésien ou organozincique ou organoaluminique), dans le milieu hydrocarbure liquide, contenant le support de chlorure de magnésium et le composé du titane. Il est également possible d'introduire progressivement et simultanément l'agent réducteur et le composé du titane dans le milieu d'hydrocarbure liquide contenant le support de chlorure de magnésium. Toutefois, il est généralement préférable d'introduire progressivement le composé du titane dans le milieu d'hydrocarbure liquide contenant le support de chlorure de magnésium et l'agent réducteur.

Les catalyseurs obtenus selon la présente invention se présentent sous la forme d'une poudre, de couleur généralement brun-rouge, constituée de particules dont les propriétés physiques telles que la forme sphéroïdale, l'aspect de surface, le diamètre moyen en masse et la distribution granulométrique définie par le rapport Dm/Dn, sont sensiblement identiques à celles des particules du support de chlorure de magnésium dont elles sont issues.

Les catalyseurs selon l'invention peuvent être utilisés pour polymériser ou copolymériser l'éthylène, en utilisant des techniques connues de polymérisation en suspension dans un milieu d'hydrocarbure liquide ou à l'état sec, par exemple en lit fluidisé, après évaporation du milieu d'hydrocarbure liquide dans lequelle le catalyseur a été préparé. Dans tous les cas, la polymérisation ou la copolymérisation est effectuée en utilisant un cocatalyseur organométallique, de préférence un composé organoaluminique, ledit cocatalyseur étant utilisé en quantité telle que les rapports atomiques Al/Ti soient compris entre 0,1 et 50.

Cependant, et c'est un autre aspect de la présente invention, il a été trouvé que les catalyseurs décrits ci-dessus peuvent être avantageusement utilisés après avoir subi une prépolymérisation. Cette prépolymérisation, qui conduit à des particules dont les dimensions et formes sont sensiblement homothétiques de celles du catalyseurs de départ, consiste à mettre en contact le catalyseur et le cocatalyseur avec une ou plusieurs alpha-oléfines et en particulier avec de l'éthylène; la prépolymérisation

peut avantageusement être réalisée en deux étapes comme décrit ci-après. Les produits catalytiques obtenus sont spécialement intéressants lorsqu'ils sont utilisés pour la polymérisation ou la copolymérisation de l'éthylène en lit fluidisé, car ces produits possèdent des dimensions, une résistance à l'abrasion et une réactivité adaptables à ce mode de polymérisation.

Le début de la réaction de prépolymérisation (ou le premier stade de cette réaction lorsque l'on opère en deux étapes distinctes) est nécessairement réalisé en suspension dans un milieu liquide inerte.

Cette première étape de prépolymérisation se poursuit jusqu'à ce que chaque particule de catalyseur comporte de 0,1 à 10 g de polyéthylène ou de copolymère de l'éthylène par millimole de titane présent dans le catalyseur. La prépolymérisation peut ensuite se poursuivre (dans une deuxième étape) soit en suspension dans un milieu d'hydrocarbure liquide, soit à sec; en général, elle peut être poursuivie - tout en conservant au catalyseur une activité convenable - jusqu'à ce que chaque particule de catalyseur comporte 10 à 500 g de polyéthylène ou de copolymère de l'éthylène par millimole de titane présent dans le catalyseur.

Il est important de remarquer qu'en utilisant le catalyseur selon l'invention, de développement de chaque particule s'effectue selon des dimensions homothétiques de celles de la particule du support initial; il s'ensuit que le polymère ou le copolymère de l'éthylène obtenu se présente sous forme de particules de forme sphéroïdale et de même distribution granulométrique que le support initial.

*Méthode de détermination des diamètres moyens en masse (Dm) et en nombre (Dn) des particules de support de chlorure de magnésium ou du catalyseur.*

Selon l'invention, les diamètres moyens en masse (Dm) et en nombre (Dn) des particules de support de chlorure de magnésium ou de catalyseur sont mesurés à partir d'observations microscopiques, au moyen de l'analyseur d'images Optomax (Micro-Measurements Ltd., Grande-Bretagne). Le principe de la mesure consiste à obtenir à partir de l'étude expérimentale par microscopie optique d'une population de particules une table d'effectifs où est donné le nombre ($n_i$) de particules appartenant à chaque classe (i) de diamètres, chaque classe (i) étant caractérisée par un diamètre intermédiaire ($d_i$), compris entre les limites de ladite classe. Suivant la norme française homologuée NF X 11-630 de juin 1981, Dm et Dn sont fournis par les formules suivantes:

. diamètre moyen en masse: $Dm = \frac{\Sigma\, ni\, (di)^3\, di}{\Sigma\, ni\, (di)^3}$,

. diamètre moyen en nombre: $Dn = \frac{\Sigma\, ni\, di}{\Sigma\, ni}$.

Le rapport Dm/Dn caractérise la distribution granulométrique; il est parfois appelé largeur de distribution granulométrique.

La mesure par l'analyseur d'images Optomax est réalisée au moyen d'un microscope inversé qui permet l'examen des suspensions de particules de chlorure de magnésium ou de catalyseur avec un grossissement compris entre 16 et 200 fois. Une caméra de télévision reprend les images données par le microscope inversé et les transmet à un ordinateur qui analyse les images ligne par ligne et point par point sur chaque ligne, en vue de déterminer les dimensions ou diamètres des particules, puis de les classer.

Les exemples suivants illustrent l'invention.

*Exemple 1*

*Préparation du support*

Dans un réacteur de 5 l en acier inoxydable muni d'un système d'agitation tournant à 750 $min^{-1}$ et contenant 800 ml de n-hexane, on introduit à température ambiante (20° C) et sous couverture d'azote 1725 ml d'une solution de butyloctylmagnésium dans le n-hexane contenant 1500 mmol de magnésium et 153 ml (750 mmol) d'éther diisoamylique. Le réacteur est alors chauffé à 50° C et on y introduit progressivement en 3h 322 ml de chlorure de t-butyle (soit 2925 mmol).

A la fin de cette addition, on maintient la suspension à 50° C pendant 3 h et on lave le précité obtenu avec du n-hexane.

Le produit solide (A) obtenu a la composition suivante par mole magnésium: 1,97 mol de chlore, 0,03 mol de Mg-C et 0,02 mol d'éther diisoamylique. A l'examen microscopique, le produit solide (A) se présente sous la forme d'une poudre constituée de particules sphéroïdiques (le rapport moyen entre grand et petit axe, D/d, des particules est égal à 1,2), ayant une distribution granulométrique étroite, définie par le rapport Dm/Dn égal à 1,1 avec Dm = 52 µm; on trouve en outre que plus de 90% en poids des particules ont un diamètre moyen compris entre 47 et 57 µm; la densité du produit est égale à 1,9 et sa surface spécifique à 38 $m^2/g$ (BET); la surface des particules est parfaitement lisse.

*Préparation du catalyseur*

Dans 3000 ml de suspension dans le n-hexane de produit (A), contenant 1450 mmol de $MgCl_2$, on ajoute sous agitation 82 ml d'éther diisoamylique et 400 ml d'une solution 1,2 molaire de chlorure de diéthylaluminium dans le n-hexane (soit 480 mmol). Le réacteur est porté à 50° C et on y introduit progressivement en 2 h 650 ml d'une solution 0,6 molaire de dichlorure de di-n-propoxytitane dans le n-hexane

(soit 390 mmol).

A la fin de cette introduction, on porte la température à 80° C et on maintient celle-ci pendant 2 h. Le catalyseur obtenu est ensuite lavé cinq fois avec du n-hexane pour donner le solide catalytique prêt à l'emploi. L'analyse du catalyseur (B) obtenu montre qu'il contient par mole de titane total: 0,94 mol de titane trivalent, 0,06 mol de titane tétravalent, 3,85 mol de magnésium, 9,97 mol de chlore, 0,20 mol d'aluminium et 0,11 mol d'éther diisoamylique. Le catalyseur ainsi défini est une poudre de couleur brune composée de particules de forme sphéroïdale, ayant une distribution granulométrique étroite telle que plus de 90% des particules ont un diamètre moyen compris entre 50 et 60 µm, avec Dm = 55 µm; on trouve, en outre, que le rapport Dm/Dn des particules de catalyseur est égal à 1,2; la surface de ces particules est parfaitement lisse.

*Prépolymérisation (première étape)*

Dans un réacteur de 5 l en acier inoxydable, muni d'un système d'agitation tournant à 750 $min^{-1}$ et contenant 2 l de n-hexane chauffé à 50° C, on introduit sous couverture d'azote 100 mmol de tri-n-octylaluminium (TnOA) et une suspension du catalyseur (B) dans l'hexane contenant 500 mmol de titane [soit 295 g de (B)]. Le réacteur est chauffé à 60° C et l'éthylène y est introduit à un débit constant et égal à 167 g/h, pendant 3 h. A la fin de la réaction on transvase le tout dans un évaporateur rotatif sous vide; on obtient ainsi 820 g de poudre sèche d'un prépolymère de couleur brun clair, composée de particules d'un diamètre moyen en masse égal à 66 µm et de distribution granulométrique étroite. La poudre (C) est conservée sous azote.

*Prépolymérisation (deuxième étape)*

Dans un réacteur à lit fluidisé de 15 cm de diamètre fonctionnant avec une vitesse de gaz de 10 cm/s, sous des pressions partielles de 0,8 MPa d'azote, 0,1 MPa d'hydrogène et 0,1 MPa d'éthylène, on introduit toutes les 6 min 11 g de la poudre (C) et en continu 25 g/h de TnOA pur, dans la moitié inférieure du lit maintenu à 70° C. Au soutirage séquencé, on recueille 4 kg/h d'une poudre légèrement teintée en beige qui présente, pour un temps de séjour de 0,5 h dans le réacteur, une teneur en titane de 800 ppm, un diamètre moyen en masse de 260 µm et une masse volumique apparente de 0,41 $g/cm^3$; le prépopymère (D) ainsi obtenu est également conservé sous azote.

*Polymérisation de l'éthylène*

Dans un réacteur à lit fluidisé de 46 cm de diamètre fonctionnant avec un gaz ascensionnel animé d'une vitesse de 45 cm/s et sous des pressions partielles de 1,2 MPa d'hydrogène et 0,8 MPa d'éthylène, on introduit de manière séquencée 0,5 kg/h de prépolymère (D) dans le lit maintenu à 85° C. Au soutirage séquencé, on recueille 25 kg/h d'une poudre blanche qui présente, pour un temps de séjour de 6 h dans le réacteur, une teneur en titane de 16 ppm, un diamètre moyen en masse de 940 µm, une distribution granulométrique étroite et une masse volumique apparente de 0,47 $g/cm^3$; par ailleurs, l'indice de fluidité sous 2,16 kg à 190° C est de 6 g/10 min et la largeur de distribution des masses moléculaires, Mw/Mn, mesurée par GPC, est égale à 4,0.

*Exemple 2*

On utilise comme support (A) une poudre à base de chlorure de magnésium, constituée de particulles sphériques ayant une distribution granulométrique étroite, telle que plus de 90% en poids des particules ont un diamètre moyen compris entre 29 et 35 µm, avec Dm = 32 µm; cette poudre présente une densité égale à 1,85 et une surface spécifique égale à 41 $m^2/g$ (BET).

*Préparation du catalyseur*

Elle est identique à celle de l'exemple 1. L'analyse du catalyseur (B) obtenu donne par mole de titane total: 0,96 mol de titane trivalent 0,04 mol de titane tétravalent, 3,60 mol de magnésium, 9,40 mol de chlore, 0,13 mol d'aluminium et 0,07 mol d'éther diisoamylique. Le catalyseur (B) est une poudre de couleur brune composée de particules sphériques, ayant une distribution granulométrique étroite telle que plus de 90% en poids des particules ont un diamètre moyen compris entre 30 et 36 µm, avec Dm = 33 µm; la surface des particules de catalyseur est légèrement bosselée, du type framboise.

*Prépolymérisation (première étape)*

Elle est identique à celle de l'exemple 1. On obtient 807 g d'une poudre sèche (C) d'un prépolymère, ayant un diamètre moyen en masse égal à 40 µm et une distribution granulométrique étroite.

*Précopolymérisation (deuxième étape)*

Dans un réacteur à lit fluidisé de 15 cm de diamètre, fonctionnant avec un gaz ascensionnel animé d'une vitesse de 10 cm/s et sous des pressions partielles de 1 MPa d'azote, 0,04 MPa d'hydrogène, 0,05 MPa de butène-1 et 0,13 MPa d'éthylène, on introduit toutes les 6 min 6,5 g de la poudre (C) et en continu 26,4 g/h de TnOA dans le lit maintenu à 70° C. On soutire 4 kg/h de poudre (D) d'un précopolymère de l'éthylène dont la teneur en titane est de 480 ppm; pour un temps de séjour de 0,5 h dans le réacteur.

Cette poudre présente un diamètre moyen en masse de 190 µm et une masse volumique apparente de 0,36 g/cm³.

*Copolymérisation de l'éthylène et du butène-1*

Dans un réacteur à lit fluidisé de 46 cm de diamètre fonctionnant avec un gaz ascensionnel animé d'une vitesse de 45 cm/s et sous des pressions partielles de 0,7 MPa d'azote, 0,2 MPa d'hydrogène, 0,26 MPa de butène-1 et 0,84 MPa d'éthylène, on introduit 0,44 kg/h du précopolymère (D) dans le lit maintenu à 80° C. Au soutirage, on recueille 21 kg/h d'une poudre de copolymère de l'éthylène qui présente, pour un temps de séjour de 6 h dans le réacteur, une teneur en titane égale à 10 ppm, un diamètre moyen en masse de 720 µm et une distribution granulométrique étroite; par ailleurs, l'indice de fluidité du copolymère sous 2,16 kg à 190° C est égal à 1 g/10 min; sa densité à 20° C est égale à 0,917 et sa résistance à la flexion à 21 MPa. Sa masse volumique apparente est égale à 0,40 g/cm³, valeur plus faible que celle de l'exemple 2, en raison de la surface de type framboise des particules de copolymère qui sont à l'image des particules du catalyseur.

*Exemple 3*

On utilise comme support (A) une poudre à base de chlorure de magnésium, constituée de particules sphériques ayant une distribution granulométrique étroite, telle que plus de 90% en poids des particules ont un diamètre moyen compris entre 21 et 25 µm, avec Dm = 23 µm; cette poudre présente une densité égale à 2,1 et une surface spécifique égale à 46 m²/g (BET).

*Préparation du catalyseur*

Elle est identique à celle de l'exemple 1. L'analyse du catalyseur (B) obtenu donne par mole de titane total: 0,94 mol de titane trivalent, 0,06 mol de titane tétravalent, 3,80 mol de magnésium, 9,84 mol de chlore, 0,16 mol d'aluminium de 0,08 mol d'éther diisoamylique. Le catalyseur (B) est une poudre brune composée de particules sphéroïdiques, ayant une distribution granulométrique étroite que plus de 90% en poids des particules ont un diamètre moyen compris entre 21 et 25 µm, avec Dm = 23 µm.

*Prépolymérisation (première étape)*

Elle est identique à celle de l'exemple 1. On obtient 817 g de poudre sèche (C) d'un prépolymère ayant un diamètre moyen en masse égal à 28 µm et une distribution granulométrique étroite.

*Prépolymérisation (deuxième étape)*

Dans un réacteur à lit fluididé de 15 cm de diamètre fonctionnant avec un gaz ascensionnel animé d'une vitesse de 10 cm/s et sous des pressions partielles de 1,8 MPa d'azote, 0,1 MPa d'hydrogène, et 0,1 MPa d'éthylène; on introduit toutes les 5 min 2,2 g de poudre (C) et en continu, 28,4 g/h de TnOA dans la moitié inférieure du lit maintenu à 70° C. La poudre (D) de prépolymère, recueille au soutirage à raison de 4 kg/h, présente, pour un temps de séjour de 0,5 h dans le réacteur, une teneur en titane égale à 190 ppm, un diamètre moyen en masse de 175 µm et une masse volumique apparente de 0,40 g/cm³.

*Polymérisation de l'éthylène*

Elle est identique à celle de l'exemple 1. On obtient ainsi un polyéthylène, de teneur en titane égale à 4 ppm, ayant un diamètre moyen en masse de 640 µm, une distribution granulométrique très étroite et une masse volumique apparente de 0,51 g/cm³; par ailleurs, l'indice de fluidité du polymère sous 2,16 kg à 190° C est égale à 8 g/10 min.

*Exemple 4*

On utilise comme support (A) une poudre à base de chlorure de magnésium, constituée de particules sphéroïdiques ayant une distribution granulométrique étroite, telle que Dm/Dn = 1,3 avec Dm = 32 µm; cette poudre contient moins de 0,1% en poids de particules de diamètre inférieur à 5 µm; elle présente une densité égale à 1,85 et une surface spécifique égale à 41 m²/g (BET). La surface des particules est légèrement bosselée, du type framboise.

*Préparation du catalyseur*

Elle est identique à celle de l'exemple 1. L'analyse du catalyseur (B) obtenu donne par mole de titane total; 0,96 mol de titane trivalent, 0,04 mol de titane tétravalent, 3,60 mol de magnésium 9,40 mol de chlore, 0,13 mol d'aluminium et 0,07 mol d'éther diisoamylique. Le catalyseur (B) est une poudre de couleur brune composée de particules sphéroïdiques, ayant une distribution granulométrique telle que Dm = 1,3 avec Dm = 33 µm; la surface des particules de catalyseur est également de type framboise.

*Prépolymérisation (première étape)*

Elle est identique à celle de l'exemple 1. On obtient 810 g d'une poudre sèche (C) d'un prépolymère, ayant un diamètre moyen en masse égal à 40 µm et une distribution granulométrique étroite.

*Précopolymérisation (deuxième étape)*

Dans un réacteur à lit fluidisé de 15 cm de diamètre, fonctionnant avec un gaz ascentionnel animé d'une vitesse de 10 cm/s et sous des pressions partielles de 1 MPa d'azote, 0,04 MPa d'hydrogène, 0,05 MPa de butène-1 et 0,13 MPa d'éthylène, on introduit toutes les 6 min 6,5 g de la poudre (C) et en continu 26,4 g/h de TnOA dans le lit maintenu à 70° C. On soutire 4 kg/h de poudre (D) d'un précopolymère de l'éthylène dont la teneur en titane est de 480 ppm, pour un temps de séjour de 0,5 h dans le réacteur. Cette poudre présente un diamètre moyen en masse de 190 µm et une masse volumique apparente de 0,36 g/cm³.

*Copolymérisation de l'éthylène et du butène-1*

Dans un réacteur à lit fluidisé de 46 cm de diamètre fonctionnant avec un gaz ascensionnel animé d'une vitesse de 45 cm/s et sous des pressions partielles de 0,7 MPa d'azote, 0,2 MPa d'hydrogène, 0,3 MPa de butène-1 et 0,8 MPa d'éthylène, on introduit 0,44 kg/h du précopolymère (D) dans le lit maintenu à 80° C. Au soutirage, on recueille 21 kg/h d'une poudre de copolymère de l'éthylène qui présente, pour un temps de séjour de 6 h dans le réacteur, une teneur en titane égale à 10 ppm, un diamètre moyen en masse de 720 µm et une distribution granulométrique étroite; par ailleurs, l'indice de fluidité du copolymère sous 2,16 kg à 190° C est égal à 1,5 g/10 min et la largeur de distribution des masses moléculaires, Mw/Mn, égale à 4,5: sa densité à 20° C est égale à 0,918 et sa résistance à la flexion à 21 MPa. Sa masse volumique apparente est égale à 0,40 g/cm³.

*Exemple 5*

On utilise comme support (A) une poudre à base de chlorure de magnésium, constituée de particules sphéroïdiques ayant une distribution granulométrique étroite, telle que Dm/Dn = 1,5 avec Dm = 23 µm; cette poudre contient moins de 0,05% en poids de particules de diamètre inférieur à 6 µm; elle présente une densité égale à 1,9 et une surface spécifique égale à 42 m²/g (BET); la surface des particules est très lisse.

*Préparation du catalyseur*

Elle est identique à celle de l'exemple 1. L'analyse du catalyseur (B) obtenu donne par mole de titane total: 0,95 mol de titane trivalent, 0,05 mol de titane tétravalent, 3,8 mol de magnésium, 9,8 mol de chlore, 0,15 mol d'aluminium et 0,09 mol d'éther diisoamylique. Le catalyseur (B) est une poudre brune composée de particules sphéroïdiques, ayant une distribution granulométrique telle que Dm/Dn = 1,5 avec Dm = 30 µm; les particules de catalyseur ont une surface aussi lisse que le support initial.

*Prépolymérisation (première étape)*

Elle est identique à celle de l'exemple 1. On obtient 820 g de poudre sèche (C) d'un prépolymère ayant un diamètre moyen en masse égal à 36 µm et une distribution granulométrique étroite.

*Prépolymérisation (deuxième étape)*

Dans un réacteur à lit fluidisé de 15 cm de diamètre fonctionnant avec un gaz ascensionnel animé d'une vitesse de 10 cm/s et sous des pressions partielles de 1,8 MPa d'azote, 0,1 MPa d'hydrogène, et 0,1 MPa d'éthylène, on introduit toutes les 5 min 2,1 g de poudre (C) et en continu 28,5 g/h de TnOA dans la moitié inférieure du lit maintenu à 70° C. La poudre (D) de prépolymère, recueille au soutirage à raison de 4 kg/h, présente, pour un temps de séjour de 0,5 h dans le réacteur, une teneur en titane égale à 185 ppm, un diamètre moyen en masse de 225 µm et une masse volumique apparente de 0,42 g/cm³.

*Polymérisation de l'éthylène*

Elle est identique à celle de l'exemple 1. On obtient ainsi un polyéthylène, de teneur en titane égale à 5 ppm, ayant un diamètre moyen en masse de 810 µm, une distribution granulométrique très étroite et une masse volumique apparente de 0,51 g/m³; par ailleurs, l'indice de fluidité du polymère sous 2,16 kg à 190° C est égale à 7 g/10 min et la largeur de distribution des masses moléculaires, Mw/Mn, égale à 4,3.

*Exemple 6*

On utilise comme support (A) une poudre à base de chlorure de magnésium, constituée de particules sphéroïdiques ayant une distribution granulométrique étroite, telle que Dm/Dn = 2,5 avec Dm = 20 µm; cette poudre contient moins de 0,05% en poids de particules de diamètre inférieur à 4 µm; elle présente une densité égale à 1,9 et une surface spécifique égale à 46 m²/g (BET); la surface des particules est lisse.

*Préparation du catalyseur*

Elle est identique à celle de l'exemple 1. L'analyse du catalyseur (B) obtenu donne par mole de titane total : 0,94 mol de titane trivalent, 0,06 mol de titane tétravalent, 3,80 mol de magnésium, 9,85 mol de chlore, 0,16 mol d'aluminium et 0,08 mol d'éther diisoamylique. Le catalyseur (B) est une poudre brune composée de particules sphéroïdiques, ayant une distribution granulométrique telle que Dm/Dn = 2,5, avec Dm = 20 µm; les particules de catalyseur ont

une surface aussi lisse que le support initial.

*Prépolymérisation (première étape)*

Elle est identique à celle de l'exemple 1. On obtient 815 g de poudre sèche (C) d'un prépolymère ayant un diamètre moyen en masse égal à 24 µm et une distribution granulométrique étroite.

*Prépolymérisation (deuxième étape)*

Dans un réacteur à lit fluidisé de 15 cm de diamètre fonctionnant avec un gaz ascensionnel animé d'une vitesse de 10 cm/s et sous des pressions partielles de 1,8 MPa d'azote, 0,1 MPa d'hydrogène, et 0,1 MPa d'éthylène, on introduit toutes les 5 min 2,2 g de poudre (C) et en continu 28,4 g/h de TnOA dans la moitié inférieure du lit maintenu à 70° C. La poudre (D) de prépolymère, recueillie au soutirage à raison de 4 kg/h, présente, pour un temps de séjour de 0,5 h dans le réacteur, une teneur en titane égale à 190 ppm, un diamètre moyen en masse de 150 µm et une masse volumique apparente de 0,44 g/cm³.

*Polymérisation de l'éthylène*

Elle est identique à celle de l'exemple 1. On obtient ainsi un polyéthylène, de teneur en titane égale à 4 ppm, ayant un diamètre moyen en masse de 550 µm, une distribution granulométrique très étroite et une masse volumique apparente de 0,53 g/cm³, par ailleurs, l'indice de fluidité du polymère sous 2,16 kg/h à 190° C est égale à 8 g/10 min et la largeur de distribution des masses moléculaires, Mw/Mn, égale à 4,1.

*Exemple 7*

On utilise le support (A) prépare à l'exemple 3.

*Préparation du catalyseur*

Dans 3000 ml de suspension du support (A) contenant 1450 mmol de $MgCl_2$, on ajoute sous agitation 8,2 ml d'éther diisoamylique et 270 ml d'une solution 1,2 molaire de chlorure de diéthylaluminium dans le n-hexane. Le milieu réactionnel est chauffé à 30° C et on y introduit progressivement en 2 h 650 ml d'une solution 0,6 molaire de tétrachlorure de titane dans le n-hexane. A la fin de cette introduction, le milieu est chauffé à 80° C et maintenu pendant 2 h sous agitation à cette température. Le catalyseur obtenu est ensuite lavé cinq fois avec du n-hexane pour donner le solide catalytique (B) prêt à l'emploi.

L'analyse du catalyseur (B) montre qu'il contient par mole de titane total: 0,97 mol de titane trivalent, 0,03 mol de titane tétravalent, 3,7 mol de magnésium, 11,2 mol de chlore, 0,33 mol d'aluminium et 0,01 mol d'éther diisoamylique.

Le catalyseur ainsi défini est une poudre de couleur brune composée de particules sphéroïdiques, ayant une distribution granulométrique étroite, telle que plus de 90% en poids des particules ont un diamètre moyen compris entre 21 et 25 µm, avec Dm = 23 µm.

*Prépolymérisation en suspension*

Dans un réacteur de 5 l en acier inoxydable, on introduit 3000 ml de n-hexane qu'on chauffe à 70° C, sous agitation (750 tr/min), 19 ml d'une solution 1,14 molaire de tri-n-octylaluminium dans le n-hexane, 16,7 ml d'une suspension du catalyseur (B) dans le n-hexane, contenant 0,13 mol de titane par litre et un volume de 1500 ml d'hydrogène, mesuré dans les conditions normales. On introduit alors de l'éthylène suivant un débit de 180 g/h pendant 3 h, avec addition d'un volume de 1500 ml d'hydrogène, mesuré dans les conditions normales, après 1 h 30 de réaction. Le prépolymère obtenu est séché à 70° C sous azote, la quantité recueillie étant de 530 g. La poudre de prépolymère présente une distribution granulométrique et un diamètre moyen en masse égal à 180 µm. Sa masse volumique apparente est de 0,36 g/cm³.

*Polymérisation de l'éthylène*

Elle est identique à celle de l'exemple 1, excepté le fait d'utiliser le prépolymère préparé dans l'exemple 7 et que les pressions d'hydrogène et d'éthylène sont respectivement égales à 0,6 MPa et 1,4 MPa. Le prépolymère est introduit dans le lit fluidisé suivant un débit de 0,470 kg/h et la production est de 30 kg/h de polyéthylène. Le polymère obtenu a un diamètre moyen en masse de 700 µm, une masse volumique apparente de 0,44 g/cm³, un indice de fluidité sous 5 kg à 190° C de 1 g/10 min et une largeur de distribution des masses moléculaires, Mw/Mn, égale à 10. Sa teneur en titane est égale à 3 ppm.

*Exemple 8*

On utilise le catalyseur (B) préparé à l'exemple 3 et on réalise la polymérisation de l'éthylène dans les conditions suivantes:

Dans un réacteur en acier inoxydable de 5 l muni d'un système d'agitation, on introduit, sous azote, à la température ambiante (20° C), 2 l de n-hexane que l'on chauffe à 80° C, puis 4 mmol de tri-n-octylaluminium et une quantité de catalyseur (B) préparé à l'exemple 3 contenant 0,16 mmol de titane.

Le réacteur est alors fermé et on y introduit de l'hydrogène jusqu'à une pression de 0,10 MPa, et de l'éthylène suivant un débit de 160 g/h pendant 3 h.

On recueille, après refroidissement et évaporation du n-hexane, 480 g environ d'une poudre de

polyéthylène, ayant une teneur en titane égale à 16 ppm, un diamètre moyen en masse égal à 400 µm, une distribution granulométrique étroite et une masse volumique apparente égale à 0,40 g/cm³.

## Revendications

1. Catalyseurs utilisables pour la polymérisation et la copolymérisation de l'éthylène qui comportent un support contenant essentiellement du chlorure de magnésium et éventuellement un chlorure d'aluminium et se présentant sous la forme de particules sphéroidiques définie par le rapport $D/d \leqq 1,3$, avec D et d étant les grand et petit axes de ces particules, le support ayant un diamètre moyen en masse compris entre 10 et 100 µm et une distribution granulométrique telle que le rapport du diamètre moyen en masse, Dm, au diamètre moyen en nombre, Dn, est inférieur ou égal à 3, support sur lequel est précipité un composé de titane,
**caractérisés** en ce que

– la précipitation est réalisée par la réaction de réduction d'un composé du titane à sa valence maximum de formule $Ti(OR_7)_{4-n}X$ dans laquelle $R_7$ est un groupement alcoyle contenant 2 à 6 atomes de carbones, X est un atome de chlore ou de brome, et n est un nombre entier ou fractionnaire tel que $1 \leqq n \leqq 4$, au moyen d'un agent réducteur choisi parmi des composés organomagnésiens de formule $R_8MgR_9$ dans laquelle $R_8$ et $R_9$ sont des groupements alcoyle identiques ou différents contenant de 2 à 12 atomes de carbone, des composés organozinciques de formule $Zn(R_{10})_{(2-y)}X_y$ dans laquelle $R_{10}$ est un groupement alcoyle ayant de 2 à 12 atomes de carbone, X est le chlore ou le brome, et y un nombre entier ou fractionnaire tel que $0 \leqq y \leqq 1$, et des composés organoaluminiques de formule $Al(R_{11})_{(3-z)}X_z$ dans laquelle $R_{11}$ est un groupement alcoyle ayant de 2 à 12 atomes de carbone, X est le chlore ou le brome, et z est un nombre entier ou fractionnaire tel que $0 \leqq z \leqq 2$;
– ladite réaction de réduction est réalisée en présence ou non d'un composé donneur d'électrons choisi parmi les amines, les amides, les phosphines, les sulfoxydes, les sulfones ou les éthers;
– les quantités relatives des divers composés (support, composé du titane, organomagnésien ou organozincique ou organoaluminique, donneur d'électrons) sont, en rapports molaires, telles que:

– support/composé du titane compris entre 1 et 50, de préférence compris entre 2,5 et 10;
– composé organomagnésien ou organozincique ou organoaluminique/composé du titane inférieur à 3 et, de préférence, compris entre 0,5 et 1,5;
– composé donneur d'électrons/composé du titane compris entre 0 et 5, de préférence, compris entre 0,1 et 1,5;

– le support étant constitué de particules dont
la surface spécifique est comprise entre environ 20 et 60 m²/g (BET),
la densité est comprise entre environ 1,6 et 2,2 et le rapport atomique $Cl/(Mg+3/2Al)$ est légèrement inférieur à 2, et les particules contiennent, en faible proportion, des produits à liaison Mg-C et également un composé donneur d'électrons comme défini ci-dessus,
le support étant susceptible d'être obtenu par réaction de précipitation sous agitation dans un milieu d'hydrocarbure liquide, à une température comprise entre 5 et 80 °C, entre

(a) un composé organomagnésien de formule I

$$R_1MgR_2 \quad (I)$$

ou un complexe d'addition de formule II

$$R_1MgR_2, \quad xAl(R_3)_3 \quad (II),$$

dans lesquelles
$R_1$, $R_2$, $R_3$ sont des radicaux alcoyle identiques ou différents ayant de 2 à 12 atomes de carbone
et
x est compris entre 0,01 et 2
et
(b) un chlorure d'alcoyle de formule III

$$R_4Cl \quad (III)$$

dans laquelle $R_4$ est un radical alcoyle secondaire ou tertiaire ayant de 3 à 12 atomes de carbone,
en présence d'un composé donneur d'électrons choisi parmi les amines, des amides, les phosphines, les sulfoxydes, les sulfones et les éthers dans des conditions telles que

– le rapport molaire $R_4Cl/R_1MgR_2$ est compris entre 1,5 et 2,5 et de préférence compris entre 1,85 et 1,95;
– le rapport molaire $R_4Cl/R_1MgR_2$, $xAl(R_3)3$ est compris entre $1,5(1+3/2{\cdot}x)$ et $2,5(1+3/2{\cdot}x)$, et de préférence entre $1,85 (1+3/2{\cdot}x)$ et $1,95 (1+3/2{\cdot}x)$;
– le rapport molaire entre le composé donneur d'électrons et le composé organomagnésien ($R_1MgR_2$ ou $R_1MgR_2$, $xAl(R_3)_3$) est compris entre 0,01 et 2, et de préférence compris entre 0,01 et 1.

2. Catalyseurs selon la revendication 1, caractérisés en ce que le support présente une distribution granulométrique telle que le rapport Dm/Dn du diamètre moyen en masse au diamètre moyen en nombre des particules est compris entre 1,1 et 2,5.

3. Catalyseurs selon la revendication 1, caractérisés en ce que le support présente une distribution granulométrique telle que le rapport Dm/Dn est compris entre 1,1 et 1,5.

4. Catalyseurs selon la revendication 1, caractérisés en ce que le support présente une distribution granulométrique telle que plus de 90 % en poids des particules d'un même lot sont compris dans la fourchette Dm ± 10%.

5. Procédé de préparation des catalyseurs supportés selon la revendication 1 par précipitation d'un composé de titane de formule IV

$$Ti(OR_7)_{4-n}X_n \quad (IV),$$

dans laquelle
$R_7$ est un groupement alcoyle contenant 2 à 6 atomes de carbone,
X est un atome de chlore ou de brome,
et
n est un nombre entier ou fractionnaire tel que $1 \leqq n \leqq 4$,
sur un support constitué essentiellement de chlorure de magnésium et éventuellement d'un chlorure d'aluminium comprenant un composé donneur d'électrons et se présentant sous forme de particules sphéroidiques définie par le rapport $D/d \leqq 1,3$ avec D et d étant le grand et petit axes de ces particules, le support ayant un diamètre moyen en masse (Dm) compris entre 10 et 100 µm et une distribution granulométrique telle que le rapport du diamètre moyen en masse, Dm, au diamètre moyen en nombre (Dn) est inférieur ou égal à 3,
**caractérisé** en ce que:

- la précipitation est réalisée par la réaction de réduction d'un composé du titane à sa valence maximum de formule $Ti(OR_7)_{4-n}X_n$ dans laquelle $R_7$ est un groupement alcoyle contenant 2 à 6 atomes de carbones, X est un atome de chlore ou de brome, et n est un nombre entier ou fractionnaire tel que $1 \leqq n \leqq 4$, au moyen d'un agent réducteur choisi parmi des composés organomagnésiens de formule $R_8MgR_9$ dans laquelle $R_8$ et $R_9$ sont des groupements alcoyle identiques ou différents contenant de 2 à 12 atomes de carbone, des composés organozinciques de formule $Zn(R_{10})_{(2-y)}X_y$ dans laquelle $R_{10}$ est un groupement alcoyle ayant de 2 à 12 atomes de carbone, X est le chlore ou le brome, et y un nombre entier ou fractionnaire tel que $0 \leqq y \leqq 1$, et des composés organoaluminiques de formule $Al(R_{11})_{(3-z)} X_z$ dans laquelle $R_{11}$ est un groupement alcoyle ayant de 2 à 12 atomes de carbone, X est le chlore ou le brome, et z est un nombre entier ou fractionnaire tel que $0 \leqq z \leqq 2$;
- ladite réaction de réduction est réalisée en présence ou non d'un composé donneur d'électrons choisi parmi les amines, les amides, les phosphines, les sulfoxydes, les sulfones ou les éthers,
- les quantités relatives des divers composés (support, composé du titane, organomagnésien ou organozincique ou organoaluminique, donneur d'électrons) sont, en rapport molaires, telles que:
  - support/composé du titane compris entre 1 et 50, de préférence, compris entre 2,5 et 10;
  - composé organomagnésien ou organozincique ou organoaluminique/composé du titane inférieur à 3 et, de préférence, compris entre 0,5 et 1,5;
  - composé donneur d'électrons/composé du titane compris entre 0 et 5, de préférence, compris entre 0,1 et 1,5;
- le support étant constitué de particules dont la surface spécifique est comprise entre environ 20 et 60 $m^2/g$ (BET),
la densité est comprise entre environ 1,6 et 2,2 et le rapport atomique $Cl/(Mg+3/2Al)$ est légèrement inférieur à 2, et les particules contiennent en faible proportion, des produits à liaison Mg-C et également un composé donneur d'électrons comme défini ci-dessus,
le support étant obtenu par réaction de précipitation sous agitation dans un milieu d'hydrocarbure liquide, à une température comprise entre 5 et 80 °C, entre

(a) un composé organomagnésien de formule I

$$R_1MgR_2 \quad (I)$$

ou un complexe d'addition de formule II

$$R_1MgR_2, \quad xAl(R_3)_3 \quad (II),$$

dans lesquelles
$R_1$, $R_2$, $R_3$ sont des radicaux alcoyle identiques ou différents ayant de 2 à 12 atomes de carbone
et
x est compris entre 0,01 et 2,
et
(b) un chlorure d'alcoyle de formule III

$$R_4Cl \quad (III)$$

dans laquelle $R_4$ est un radical alcoyle secondaire ou tertiaire ayant de 3 à 12 atomes de carbones,
en présence du donneur d'électrons choisi parmi les amines, des amides, les phosphines, les sulfoxydes, les sulfones et les éthers dans des conditions telles que

- le rapport molaire $R_4Cl/R_1MgR_2$ est compris entre 1,5 et 2,5, et de préférence compris entre 1,85 et 1,95;
- le rapport molaire $R_4Cl/R_1MgR_2, xAl(R_3)_3$ est compris entre 1,5 (1+3/2·x) et 2,5(1+3/2·x), et de préférence entre 1,85(1+3/2·x) et 1,95 (1+3/2·x);
- le rapport molaire entre le composé donneur d'électrons et le composé organomagnésien ($R_1MgR_2$ ou $R_1MgR_2, xAl(R_3)_3$) est compris entre 0,01 et 2, et de préférence compris entre 0,01 et 1.

6. Procédé de préparation de catalyseurs selon la revendication 5, caractérisé en ce que ladite réaction de réduction est réalisée en présence ou non d'un

éther aliphatique de formule $R_{12}OR_{13}$ dans laquelle $R_{12}$ et $R_{13}$, identiques ou différents, sont choisis parmi les groupements alcoyles ayant de 1 à 12 atomes des carbone.

7. Procédé d'utilisation des catalyseurs selon l'une des revendications 1 à 4, caractérisé en ce que la polymérisation ou la copolymérisation de l'éthylène est réalisée en utilisant ces catalyseurs en présence d'un composé organoaluminique ou halogénoorganoaluminique comme cocatalyseur.

8. Procédé selon la revendication 7, caractérisé en ce qu'avant de réaliser ladite polymérisation ou copolymérisation, le catalyseur est soumis à une prépolymérisation ou à une précopolymérisation de l'éthylène de façon que chaque particule de catalyseur comporte de 0,1 à 500 g de polymère par millimole de titane qu'elle contient.

## Patentansprüche

1. Katalysatoren für die Polymerisation und Copolymerisation von Ethylen, die einen Träger aufweisen, der im wesentlichen Magnesiumchlorid und gegebenenfalls ein Aluminiumchlorid enthält und in Form von durch das Verhältnis $D/d \leqq 1{,}3$ definierten sphäroidalen Partikeln vorliegt, wobei D und d die große bzw. die kleine Achse dieser Partikel bedeuten, und der ein Massenmittel des Durchmessers, Dm, 10 bis 100 µm und eine solche Korngrößenverteilung besitzt, daß das Verhältnis des Massenmittels des Durchmessers, $D_m$, zum Zahlenmittel des Durchmessers, $D_n$, kleiner oder gleich 3 ist, wobei auf dem Träger eine Titanverbindung durch Ausfällung niedergeschlagen ist,

**dadurch gekennzeichnet**, daß

- die Ausfällung durch Reduktion einer Verbindung des Titans in seiner höchsten Wertigkeitsstufe der Formel $Ti(OR_7)_{4-n}X_n$, in der $R_7$ eine Alkylgruppe mit 2 bis 6 Kohlenstoffatomen und X ein Chlor- oder ein Bromatom bedeuten und n eine solche ganze oder gebrochene Zahl ist, daß $1 \leqq n \leqq 4$ ist, mit einem Reduktionsmittel, das ausgewählt ist unter Organomagnesiumverbindungen der Formel $R_8MgR_9$, in der $R_8$ und $R_9$ gleiche oder verschiedene Alkylgruppen mit 2 bis 12 Kohlenstoffatomen bedeuten, Organozinkverbindungen der Formel $Zn(R_{10})_{(2-y)}X_y$, in der $R_{10}$ eine Alkylgruppe mit 2 bis 12 Kohlenstoffatomen und X Chlor oder Brom bedeuten und y eine solche ganze oder gebrochene Zahl ist, daß $0 \leqq y \leqq 1$ ist, und Organoaluminiumverbindungen der Formel $Al(R_{11})_{(3-z)}X_z$, in der $R_{11}$ eine Alkylgruppe mit 2 bis 12 Kohlenstoffatomen und X Chlor oder Brom bedeuten und z eine solche ganze oder gebrochene Zahl ist, daß $0 \leqq z \leqq 2$ ist;
- die Reduktion in Gegenwart oder Abwesenheit einer Elektronendonorverbindung durchgeführt wird, die unter Aminen, Amiden, Phosphinen, Sulfoxiden, Sulfonen und Ethern ausgewählt ist;
- die relativen Mengen der verschiedenen Verbindungen (Träger, Titanverbindung, Organomagnesium-, Organozink- oder Organoaluminiumverbindung, Elektronendonorverbindung) folgenden Molverhältnissen entsprechen:
  - Verhältnis Träger/Titanverbindung 1 bis 50, vorzugsweise 2,5 bis 10;
  - Verhältnis Organomagnesium-, Organozink- oder Organoaluminiumverbindung/Titanverbindung kleiner als 3 und vorzugsweise 0,5 bis 1,5;
  - Verhältnis Elektronendonorverbindung/Titanverbindung 0 bis 5, vorzugsweise 0,1 bis 1,5;

und

- der Träger aus Partikeln besteht,

deren spezifische Oberfläche etwa 20 bis 60 $m^2/g$ (BET) beträgt,

deren Dichte etwa 1,6 bis 2,2 beträgt und deren Atomverhältnis $Cl/(Mg+3/2Al)$ etwas unter 2 liegt, wobei die Partikel in geringer Menge Produkte mit Mg-C-Bindungen sowie eine Elektronendonorverbindung wie oben definiert enthalten,

und der Träger durch eine Fällungsreaktion in einem flüssigen Kohlenwasserstoff bei einer Temperatur von 5 bis 80 °C unter Rühren erhältlich ist zwischen

(a) einer Organomagnesiumverbindung der Formel I

$$R_1MgR_2 \quad (I)$$

oder einem Anlagerungskomplex der Formel II

$$R_1MgR_2, xAl(R_3)_3 \quad (II),$$

in denen

$R_1$, $R_2$ und $R_3$ gleiche oder verschiedene Alkylgruppen mit 2 bis 12 Kohlenstoffatomen bedeuten

und

x 0,01 bis 2 beträgt,

und

(b) einem Alkylchlorid der Formel III

$$R_4Cl \quad (III),$$

in der $R_4$ eine sekundäre oder tertiäre Alkylgruppe mit 3 bis 12 Kohlenstoffatomen bedeutet, in Gegenwart einer unter Aminen, Amiden, Phosphinen, Sulfoxiden, Sulfonen und Ethern ausgewählten Elektronendonorverbinung unter solchen Bedingungen, daß

- das Molverhältnis $R_4Cl/R_1MgR_2$ 1,5 bis 2,5 und vorzugsweise 1,85 bis 1,95,
- das Molverhältnis $R_4Cl/R_1MgR_2, xAl(R_3)_3$ $1{,}5(1+3/2\cdot x)$ bis $2{,}5(1+3/2\cdot x)$ und vorzugsweise 1,85 $(1+3/2\cdot x)$ bis 1,95 $(1+3/2\cdot x)$ und
- das Molverhältnis zwischen der Elektro-

nendonorverbindung und der Organomagnesiumverbindung ($R_1MgR_2$ oder $R_1MgR_2$, $xAl(R_3)_3$) 0,01 bis 2 und vorzugsweise 0,01 bis 1 betragen.

2. Katalysatoren nach Anspruch 1, dadurch gekennzeichnet, daß der Träger eine solche Korngrößenverteilung aufweist, daß das Verhältnis Dm/Dn des Massenmittels des Durchmessers zum Zahlenmittel des Durchmessers der Partikel 1,1 bis 2,5 beträgt.

3. Katalysatoren nach Anspruch 1, dadurch gekennzeichnet, daß der Träger eine solche Korngrößenverteilung aufweist, daß das Verhältnis Dm/Dn 1,1 bis 1,5 beträgt.

4. Katalysatoren nach Anspruch 1, dadurch gekennzeichnet, daß der Träger eine solche Korngrößenverteilung aufweist, daß mehr als 90 Gew.-% der Partikel einer Charge im Bereich Dm ± 10 % enthalten sind.

5. Verfahren zur Herstellung der Katalysatoren mit Träger nach Anspruch 1 durch Ausfällung einer Titanverbindung der Formel IV

$Ti(OR_7)_{4-n}X_n$ (IV),

in der $R_7$ eine Alkylgruppe mit 2 bis 6 Kohlenstoffatomen und
X ein Chlor- oder Bromatom bedeuten
und
n eine solche ganze oder gebrochene Zahl ist, daß $1 \leqq n \leqq 4$ ist,
auf einem Träger, der im wesentlichen aus Magnesiumchlorid und gegebenenfalls einem Aluminiumchlorid besteht, eine Elektronendonorverbindung enthält und in Form von sphäroidalen Partikeln vorliegt, die durch das Verhältnis $D/d \leqq 1{,}3$ charakterisiert sind, wobei D und d die große bzw. die kleine Achse darstellen, und wobei der Träger ein Massenmittel des Durchmessers (Dm) von 10 und 100 µm und eine solche Korngrößenverteilung aufweist, daß das Verhältnis des Massenmittels des Durchmessers, Dm, zum Zahlenmittel des Durchmessers, Dn, kleiner oder gleich 3 ist,
**dadurch gekennzeichnet**, daß

- die Ausfällung durch Reduktion einer Verbindung des Titans in seiner höchsten Wertigkeitsstufe der Formel $Ti(OR_7)_{4-n}X_n$, in der $R_7$ eine Alkylgruppe mit 2 bis 6 Kohlenstoffatomen und X ein Chlor- oder ein Bromatom bedeuten und n eine solche ganze oder gebrochene Zahl ist, daß $1 \leqq n \leqq 4$ ist, mit einem Reduktionsmittel durchgeführt wird, das ausgewählt ist unter Organomagnesiumverbindungen der Formel $R_8MgR_9$, in der $R_8$ und $R_9$ gleiche oder verschiedene Alkylgruppen mit 2 bis 12 Kohlenstoffatomen bedeuten, Organozinkverbindungen der Formel $Zn(R_{10})_{(2-y)}X_y$, in der $R_{10}$ eine Alkylgruppe mit 2 bis 12 Kohlenstoffatomen und X Chlor oder Brom bedeuten und y eine solche ganze oder gebrochene Zahl ist, daß $0 \leqq y \leqq 1$ ist, und Organoaluminiumverbindungen der Formel $Al(R_{11})_{(3-z)}X_z$, in der $R_{11}$ eine Alkylgruppe mit 2 bis 12 Kohlenstoffatomen und X Chlor oder Brom bedeuten und z eine solche ganze oder gebrochene Zahl ist, daß $0 \leqq z \leqq 2$ ist;
- die Reduktion in Gegenwart oder Abwesenheit einer Elektronendonorverbindung durchgeführt wird, die unter Aminen, Amiden, Phosphinen, Sulfoxiden, Sulfonen und Ethern ausgewählt ist;
- die relativen Mengen der verschiedenen Verbindungen (Träger, Titanverbindung, Organomagnesium-, Organozink- oder Organoaluminiumverbindung, Elektronendonorverbindung) folgenden Molverhältnissen entsprechen:
  - Verhältnis Träger/Titanverbindung 1 bis 50 und vorzugsweise 2,5 bis 10;
  - Verhältnis Organomagnesium-, Organozink- oder Organoaluminiumverbindung/Titanverbindung kleiner als 3 und vorzugsweise 0,5 bis 1,5;
  - Verhältnis der Elektronendonorverbindung/Titanverbindung 0 bis 5 und vorzugsweise 0,1 bis 1,5,

  wobei der Träger aus Partikeln besteht,
  deren spezifische Oberfläche etwa 20 bis 60 $m^2/g$ (BET) beträgt,
  deren Dichte etwa 1,6 bis 2,2 beträgt und deren
  Atomverhältnis Cl/(Mg+3/2Al) etwas unter 2 liegt, wobei die Partikel in geringer Menge Produkte mit Mg-C-Bindungen sowie eine Elektronendonorverbindung wie oben definiert enthalten,
  und
  der Träger durch eine Fällungsreaktion in einem flüssigen Kohlenwasserstoff bei einer Temperatur von 5 bis 80 °C unter Rühren erhalten ist zwischen

  (a) einer Organomagnesiumverbindung der Formel I

  $R_1MgR_2$ (I)

  oder einem Anlagerungskomplex der Formel II

  $R_1MgR_2$, $xAl(R_3)_3$ (II),

  in denen
  $R_1$, $R_2$ und $R_3$ gleiche oder verschiedene Alkylgruppen mit 2 bis 12 Kohlenstoffatomen bedeuten
  und
  x 0,1 bis 2 beträgt,
  und

  (b) einem Alkylchlorid der Formel III

  $R_4Cl$ (III),

  in der
  $R_4$ eine sekundäre oder tertiäre Alkylgruppe mit 3 bis 12 Kohlenstoffatomen bedeutet,

in Gegenwart einer unter Aminen, Amiden, Phosphinen, Sulfoxiden, Sulfonen und Ethern ausgewählten Elektronendonorverbindung unter solchen Bedingungen, daß

- das Molarverhältnis $R_4Cl/R_1MgR_2$ 1,5 bis 2,5 und vorzugsweise 1,85 bis 1,95,
- das Molarverhältnis $R_4Cl/R_1MgR_2$, $xAl(R_3)_3$ 1,5 (1+3/2·x) bis 2,5(1+3/2·x) und vorzugsweise 1,85(1+3/2·x) bis 1,95(1+3/2·x)

und

- das Molarverhältnis zwischen der Elektronendonorverbindung und der Organomagnesiumverbindung ($R_1MgR_2$ oder $R_1MgR_2$, $xAl(R_3)_3$ 0,01 bis 2 und vorzugsweise 0,01 bis 1 betragen.

6. Verfahren zur Herstellung von Katalysatoren nach Anspruch 5, dadurch gekennzeichnet, daß die Reduktion in Gegenwart oder Abwesenheit eines aliphatischen Ethers der Formel $R_{12}OR_{13}$, in der $R_{12}$ und $R_{13}$, die gleich oder verschieden sind, Alkylgruppen mit 1 bis 12 Kohlenstoffatomen bedeuten, durchgeführt wird.

7. Verwendung der Katalysatoren nach einem der Ansprüche 1 bis 4, dadurch gekennzeichnet, daß die Polymerisation oder die Copolymerisation von Ethylen unter Verwendung dieser Katalysatoren in Gegenwart einer Organoaluminiumverbindung oder einer Halogenorganoaluminiumverbindung als Cokatalysator durchgeführt wird.

8. Verwendung nach Anspruch 7, dadurch gekennzeichnet, daß vor der Durchführung der Polymerisation oder Copolymerisation der Katalysator einer Präpolymerisation oder einer Präcopolymerisation von Ethylen derart unterworfen wird, daß jedes Katalysatorpartikel 0,1 bis 500 g Polymer pro Millimol darin enthaltenen Titans aufweist.

## Claims

1. Catalysts which may be used for the polymerization and the copolymerization of ethylene, containing a carrier mainly consisting of magnesium chloride and eventually an aluminum chloride and being present in the form of spheroidal particles defined by the ratio $D/d \leqq 1.3$ wherein D and d represent the major and the minor axes of these particles, the carrier having a mass average diameter of 10 to 100 μm and such a grain size distribution that the ratio of the mass average diameter, Dm, and the number average diameter, Dn, is less than or equal to 3, and having a titanium compound precipitated thereon,
characterized in that

- the precipitation is carried out by reduction of a compound of titanium of highest valency of the formula $Ti(OR_7)_{4-n}X_n$ wherein $R_7$ is an alkyl group having 2 to 6 carbon atoms, X is a chlorine a bromine atom, and n is an integer or a fraction such that $1 \leqq n \leqq 4$, by means of a reducing agent selected from the group consisting of organomagnesium compounds of the formula $R_8MgR_9$, wherein $R_8$ and $R_9$, being the same or different, are alkyl groups containing 2 to 12 carbon atoms, organozinc compounds of the formula $Zn(R_{10})_{2-y})X_y$ wherein $R_{10}$ is an alkyl group having 2 to 12 carbon atoms, X is chlorine or bromine, and y is an integer or a fraction such that $0 \leqq y \leqq 1$, and organoaluminum compounds of the formula $Al(R_{11})_{(3-z)}X_z$ wherein $R_{11}$ is an alkyl group having 2 to 12 carbon atoms, X is chlorine or bromine, and z is an integer or a fraction such that $0 \leqq z \leqq 2$;
- said reduction is carried out in the presence or in the absence of an electron donor compound selected from the group consisting of amines, amides, phosphines, sulfoxides, sulfones and ethers,
- the relavive amounts of the various compounds (carrier, titanium compound, organomagnesium compound, organozinc compound or organoaluminum compound, electron donor compound) correspond to the following molar ratios:
  - ratio carrier/titanium compound 1 to 50, preferably 2.5 to 10;
  - ratio organomagnesium compound or organozinc compound or organoaluminum compound/titanium compound less than 3, preferably 0.5 to 1.5;
  - ratio electron donor compound/titanium compound 0 to 5, preferably 0.1 to 1.5;
- the carrier consists of particles, the specific surface area thereof being approximately 20 to 60 $m^2/g$ (BET),

the density thereof being approximately 1.6 to 2.2,
and
the atomic ratio Cl/(Mg+3/2Al) thereof being slightly less than 2, the particles containing, in a small amount, products comprising Mg-C bonds as well as an electron donor compound as defined above,
the carrier being obtainable by precipitation reaction in a medium of a liquid hydrocarbon at a temperature of 5 to 80 °C with stirring

(a) an organomagnesium compound of the formula I

$$R_1MgR_2 \qquad (I)$$

or an addition complex of the formula II

$$R_1MgR_2, \quad xAl(R_3)_3 \qquad (II)$$

wherein
$R_1$, $R_2$ and $R_3$ being the same or different, are alkyl groups having 2 to 12 carbon atoms,

and
x is 0.01 to 2
and
(b) an alkyl chloride of the formula III

$R_4Cl$ (III)

wherein
$R_4$ is a secondary or tertiary alkyl group having 3 to 12 carbon atoms
in the presence of an electron donor compound selected from the group consisting of amines, amides, phosphines, sulfoxides, sulfones and ethers, under such conditions that

- the molar ratio $R_4Cl/R_1MgR_2$ is 1.5 to 2.5, and preferably 1.85 to 1.95;
- the molar ratio $R_4Cl/R_1MgR_2$, $xAl(R_3)_3$ is 1.5(1+3 2·x) to 2.5(1+3/2·x), and preferably 1.85(1+3/2·x) to 1.95(1+3/2·x);
- the molar ratio between the electron donor compound and the organomagnesium compound ($R_1MgR_2$ or $R_1MgR_2$, $xAl(R_3)_3$) is 0.01 and 2, and preferably 0.01 to 1.

2. Catalysts according to claim 1, characterized in that the carrier has such a grain size distribution that the ratio Dm/Dn of the mass average diameter to the number average diameter of the particles is 1.1 to 2.5.

3. Catalysts according to claim 1, characterized in that the carrier has such a grain size distribution that the ratio Dm/Dn is 1.1 to 1.5.

4. Catalysts according to claim 1, characterized in that the carrier has such a grain size distribution that more than 90 % by weight of the particles of one lot are comprised within the range Dm ± 10 %.

5. Method for the preparation of carrier-supported catalysts according to claim 1, by precipitation of a titanium compound of the formula IV

$Ti(OR_7)_{4-n}X_n$ (IV)

wherein
$R_7$ is an alkyl group having 2 to 6 carbon atoms,
X is a chlorine or a bromine atom,
and
n is an integer or a fraction such that $1 \leqq n \leqq 4$,
on a carrier mainly consisting of magnesium chloride and eventually of an aluminum chloride, containing an electron donor compound and being present in the form of spheroidal particles defined by the ratio $D/d \leqq 1.3$ wherein D and d are the major and the minor axes of these particles, said carrier having a mass average diameter, Dm, of 10 to 100 µm, and such a grain size distribution that the ratio of the mass average diameter, Dm, to the number average diameter, Dn, is less than or equal to 3,
characterized in that

- the precipitation is carried out by reduction of a compound of titanium of highest valency of the formula $Ti(OR_7)_{4-n}X_n$ wherein $R_7$ is an alkyl group having 2 to 6 carbon atoms, X is a chlorine or a bromine atom and n is an integer or a fraction such that $1 \leqq n \leqq 4$, by means of a reducing agent selected from the group consisting of organomagnesium compounds of the formula $R_8MgR_9$, wherein $R_8$ and $R_9$, being the same or different, are alkyl groups having 2 to 12 carbon atoms, organozinc compounds of the formula $Zn(R_{10})_{(2-y)}X_y$ wherein $R_{10}$ is an alkyl group having 2 to 12 carbon atoms, X is bromine or chlorine, and y is an integer or a fraction of 0 to 1 and organoaluminum compounds of the formula $Al(R_{11})_{(3-z)}X_z$ wherein $R_{11}$ is an alkyl group having 2 to 12 carbon atoms, X is chlorine or bromine, and z is an integer or a fraction such that $0 \leqq z \leqq 2$;
- said reduction is carried out in the presence or in the absence of an electron donor compound selected from the group consisting of amines, amides, phosphines, sulfoxides, sulfones and ethers,
- the relative amounts of the various compounds (carrier, titanium compound, organomagnesium compound, organozinc compound, or organo aluminum compund, electron donor compound) correspond to the following molar ratios:
  - ratio carrier/titanium compound 1 to 50, preferably 2.5 to 10;
  - ratio organomagnesium compound or organozinc compound or organoaluminum compound/titanium compound less than 3, and preferably 0.5 to 1.5;
  - ratio of the electron donor compound to the titanium compound 0 to 5, preferably 0.1 and 1.5;
- the catalyst carrier consists of particles, the specific surface area thereof being approximately 20 to 60 m²/g (BET),

the density thereof being approximately 1.6 to 2.2,
and
the atomic ratio Cl/(Mg+3/2Al) thereof being slightly less than 2, the particles containing, in a small amount, products comprising Mg-C bonds as well as an electron donor compound as defined above,
the carrier being obtained by precipitation in a medium of a liquid hydrocarbon at a temperature comprised between 5 and 80 °C with stirring of

(a) an organomagnesium compound of the formula I

$R_1MgR_2$ (I)

or an addition complex of the formula II

$R_1MgR_2$, $xAl(R_3)_3$ (II)

wherein $R_1$, $R_2$ and $R_3$, being the same or different, are alkyl groups having 2 to 12 carbon atoms,
and
x is 0.01 to 2,
and
(b) an alkyl chloride of the formula III

$R_4Cl$ (III)

wherein $R_4$ is a secondary or a tertiary alkyl group having 3 to 12 carbon atoms in the presence of an electron donor compound selected from the group consisting of amines, amides, phosphines, sulfoxides, sulfones and ethers, under such conditions that

- the molar ratio $R_4CL/R_1MgR_2$ is 1.5 to 2.5, preferably 1.85 to 1.95;
- the molar ratio $R_4Cl/R_1MgR_2$, $xAl(R_3)_3$ is $1.5(1+3\ 2 \cdot x)$ to $2.5(1+3/2 \cdot x)$, and preferably $1.85(1+3/2 \cdot x)$ to $1.95(1+3/2 \cdot x)$;
- the molar ratio between the electron donor compound and the organomagnesium compound ($R_1MgR_2$ or $R_1MgR_2$, $xAl(R_3)_3$) is 0.01 to 2, and preferably 0.01 to 1.

6. Method for the preparation of catalysts according to claim 5, characterized in that said reduction is carried out in the presence or in the absence of an aliphatic ether of the formula $R_{12}OR_{13}$ in which $R_{12}$ and $R_{13}$ being the same or different, are selected from alkyl groups having 1 to 12 carbon atoms.

7. Use of catalysts according to one of the claims 1 to 4, characterized in that the polymerization or the copolymerization of ethylene is carried out with use of said catalysts in the presence of an organoaluminum or a haloorganoaluminum compound as a cocatalyst.

8. Use according to claim 7, characterized in that before carrying out said polymerization or copolymerization, the catalyst is subjected to a prepolymerization or a precopolymerization of ethylene in such a manner that each of the catalyst particles contains 0.1 to 500 g of polymer per millimole of titanium contained therein.